# EUROPEAN PATENT SPECIFICATION

(11) **EP 3 550 863 B1**
(45) Date of publication and mention of the grant of the patent: **10.03.2021**
(21) Application number: 17877242.2
(22) Date of filing: 27.10.2017
(51) Int. Cl.: H04W 4/06, H04W 84/12, H04W 88/06, H04W 88/10

(54) **WIRELESS ACCESS NETWORK NODE, TERMINAL DEVICE, CONTROL ENTITY, CORE NETWORK NODE, METHOD, PROGRAM, AND RECORDING MEDIUM, ALL RELATING TO DATA TRANSMISSION/RECEPTION VIA WIRELESS ACCESS NETWORK**
DRAHTLOSFUNKZUGANGSNETZWERKKNOTEN, ENDGERÄTEVORRICHTUNG, KERNNETZWERKKNOTEN, VERFAHREN, PROGRAMM UND AUFZEICHNUNGSMEDIUM, ALLE IN BEZUG AUF DATENÜBERTRAGUNG/-EMPFANG ÜBER EIN DRAHTLOSZUGANGSNETZWERK
NOEUD DE RÉSEAU D'ACCÈS SANS FIL, DISPOSITIF TERMINAL, ENTITÉ DE COMMANDE, NOEUD DE RÉSEAU CENTRAL, PROCÉDÉ, PROGRAMME ET SUPPORT D'ENREGISTREMENT, TOUS SE RAPPORTANT À LA TRANSMISSION/RÉCEPTION DE DONNÉES PAR L'INTERMÉDIAIRE D'UN RÉSEAU D'ACCÈS SANS FIL

(30) Priority: 29.11.2016 JP 2016230952
(43) Date of publication of application: 09.10.2019
(73) Proprietor: NEC Corporation, Tokyo 108-8001 (JP)
(72) Inventor: OGURA, Daisuke, Tokyo 108-8001 (JP)
(74) Representative: MacDougall, Alan John Shaw
(86) International application number: PCT/JP2017/038903
(87) International publication number: WO 2018/100944

(56) References cited:
- US-A1- 2015 334 537
- US-A1- 2015 334 537
- US-A1- 2015 341 872
- US-A1- 2015 373 634

## Description

### BACKGROUND

### Technical Field

The present invention relates to a radio access network node, a terminal apparatus, a control entity, a core network node, methods, programs and recording media related to transmission and reception of data through a radio access network.

### Background Art

In Third Generation Partnership Project (3GPP), services utilizing multicast data or broadcast data such as Earthquake and Tsunami Warning System (ETWS), Multimedia Broadcast Multicast Services (MBMS), evolved Multimedia Broadcast Multicast Service (eMBMS) and the like are under consideration (see, for example, PTL 1, NPL 1 and NPL 2).

In addition, PTL 2 discloses a technology that, in a system where a communication device is able to communicate with a base station via a first communication path and to communicate with an access node via a second communication path, transfers data between the base station and the access node when changing the communication path of the communication device from the first communication path to the second communication path, in other words, when performing a handover between the base station and the access node .

### Patent Literature

US2015/373634 discloses content to be delivered to a mobile terminal over different types of networks. Content can be delivered using a select delivery method over a cellular network, a local wireless network, or a broadcast network. Within any of the networks, the content may be unicast to individual mobile terminals using individual content flows, multicast to a group of mobile terminals, or broadcast to any or all of the mobile terminals. Content can be multicast or broadcast to mobile terminals via different ones of the disparate networks. During a content flow, the network through which the content flow is delivered may be changed to allow the mobile terminal to receive the content through a different network.

US2015/334537 discloses a method, an apparatus, and a computer program product for wireless communication. The apparatus receives an evolved multimedia broadcast multicast service (eMBMS) data from a base station via multicast transmission. The apparatus transmits the received eMBMS data to one or more end nodes via unicast transmission. The one or more end nodes are connected to the network device via a local area network (LAN).
[PTL 1] JP 2008-109319 A
[PTL 2] JP 2016-525289 T

### Non-Patent Literature

[NPL 1] 3GPP TS 36.443 V13.3.0 (2016-03), "3rd Generation Partnership Project; Technical Specification Group Radio Access Network; Evolved Universal Terrestrial Radio Access Network (E-UTRAN); M2 Application Protocol (M2AP) (Release 13)"
[NPL 2] 3GPP TS 26.346 V14.0.0 (2016-09), "3rd Generation Partnership Project; Technical Specification Group Services and System Aspects; Multimedia Broadcast/Multicast Service (MBMS); Protocols and codecs (Release 14)"

### SUMMARY

As described in the above-mentioned PTL 1, NPL 1, NPL 2 and the like, it has been assumed in 3GPP that multicast data or broadcast data from a core network is directly transmitted to terminal apparatuses using Uu interfaces from an evolved Node B (eNB). However, it is desired that the multicast data or broadcast data from a core network may be more flexibly transmitted to terminal apparatuses.

In addition, PTL 2 only discloses a technology related to handover and does not consider transmitting multicast data or broadcast data from a core network to terminal apparatuses at all.

The present invention is set out in the appended independent claims. Optional features are set out in the appended dependent claim. In the following, any embodiments or aspects not forming a part of the claimed invention are presented exemplarily.

### Advantageous Effects of Invention

According to the present disclosure, it will be possible to transmit multicast data or broadcast data from a core network more flexibly to terminal apparatuses. Note that the present disclosure may exert other advantageous effects instead of the above advantageous effect or together with the above advantageous effect.

### BRIEF DESCRIPTION OF THE DRAWINGS

FIG. 1 is an explanatory diagram for describing an example of an MBMS network configuration assumed in 3GPP;
FIG. 2 is an explanatory diagram illustrating an example of a schematic configuration of a system 1 according to example embodiments of the present invention;
FIG. 3 is a block diagram illustrating an example of a schematic configuration of a base station according to a first example embodiment;
FIG. 4 is a block diagram illustrating an example of a schematic configuration of a gateway according to the first example embodiment;
FIG. 5 is a block diagram illustrating an example of a schematic configuration of a terminal apparatus according to the first example embodiment;
FIG. 6 is a block diagram illustrating an example of a schematic configuration of a control entity according to the first example embodiment;
FIG. 7 is a block diagram illustrating an example of a schematic configuration of a first core network node according to the first example embodiment;
FIG. 8 is a block diagram for describing an example of a schematic flow of a process according to the first example embodiment;
FIG. 9 is a block diagram for describing an example of a schematic flow of a process according to an example alteration of the first example embodiment;
FIG. 10 is a block diagram illustrating an example of a schematic configuration of a radio access network node according to a second example embodiment; and
FIG. 11 is a block diagram illustrating an example of a schematic configuration of a terminal apparatus according to the second example embodiment;

### DESCRIPTION OF THE EXAMPLE EMBODIMENTS

Example embodiments of the present invention will be described in detail below with reference to the accompanying drawings. Note that, in the present specification and drawings, elements to which similar descriptions are applicable are denoted by the same reference signs, whereby overlapping descriptions may be omitted.

Descriptions will be given in the following order.
1. Related Art
2. Overview of Example Embodiments of the Present Invention
3. Configuration of System According to Example Embodiments of the Present Invention
4. First Example Embodiment
   4.1. Configuration of Base Station
   4.2. Configuration of Gateway
   4.3. Configuration of Terminal Apparatus
   4.4. Configuration of Control Entity
   4.5. Configuration of First Core Network Node
   4.6. Technical Features
   4.7. Example Alterations
   4.8. Conclusion
5. Second Example Embodiment
   5.1. Configuration of Radio Access Network node
   5.2. Configuration of Terminal Apparatus
   5.3. Technical Features
6. Other Modes

### « 1. Related Art »

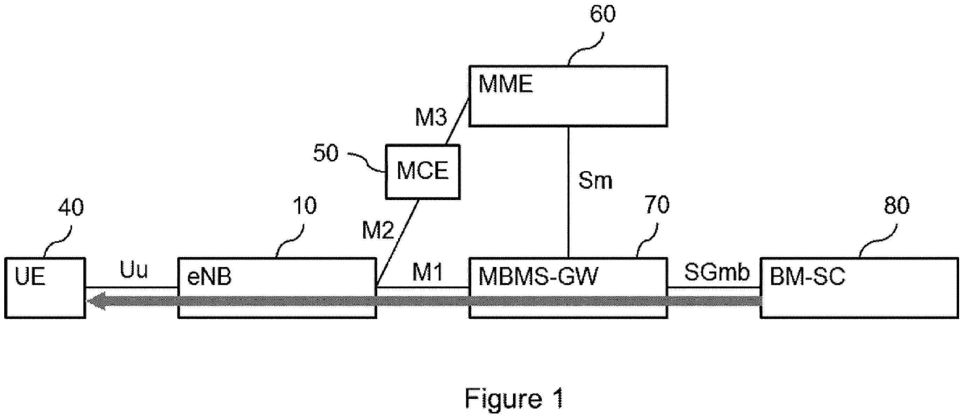

With reference to Figure 1, MBMS that is assumed in 3GPP will be described as a technology related to the example embodiments.

Currently, MBMS is under consideration in 3GPP as a data transfer scheme utilizing multicast data.

Figure 1 is an explanatory diagram for describing an example of a Multimedia Broadcast Multicast Service (MBMS) network configuration assumed in 3GPP. With reference to Figure 1, an evolved Node B (eNB) 10, a User Equipment (UE) 40, a Multicast Coordination Entity (MCE) 50, a Mobility Management Entity(MME) 60, a serving gateway (MBMS-GW) 70 and a Broadcast Multicast-Service Center (BM-SC) 80 are illustrated.

In the network configuration illustrated in Figure 1, information such as an ID of the eNB 10, the number of cells accommodated by the eNB 10 and the like is transmitted from the eNB 10 to the MME 60 via the MCE 50, first. The MME 60, then, registers the cells accommodated by the eNB 10 as a Multicast broadcast single frequency network (MBSFN) area. Next, the MME 60 further accesses the MBMS-GW (Serving Gateway) 70 to obtain an IP multicast address and transmits it to the eNB 10 via the MCE 50. In this way, a process to join a transmission scope of multicast data is performed.

After the cells accommodated by the eNB 10 joined the transmission scope, the eNB 10 receives, on the basis of the IP multicast address received from the MCE 50, multicast data transmitted from the MBMS-GW 70 and transmits the received multicast data to the UE 40 by a Uu interface.

### << 2. Overview of Example Embodiments of the Present Invention >>

### (1) Technical Issues

In the network configuration illustrated in Figure 1, only direct transmission from the eNB 10 to the UE 40 using the Uu interface is assumed. Therefore, it is desired to transmit multicast data or broadcast data from the core network more flexibly to the UE 40.

An example object of example embodiments of the present invention is to make it possible to transmit multicast data or broadcast data from a core network more flexibly to terminal apparatuses.

### (2) Technical Features

According to example embodiments of the present invention, for example, a radio access network node (eNB) is configured to receive multicast data or broadcast data transmitted from a core network (MBMS-GW); and to transmit the multicast data or the broadcast data to a terminal apparatus (UE) through a wireless local area network.

This, for example, makes it possible to transmit multicast data or broadcast data from a core network more flexibly to terminal apparatuses.

Note that the above described technical features are only a specific example of the example embodiments of the present invention and it is apparent that the example embodiments are not limited to the above described technical features.

### << 3. Configuration of System According to Example Embodiments of the Present Invention >>

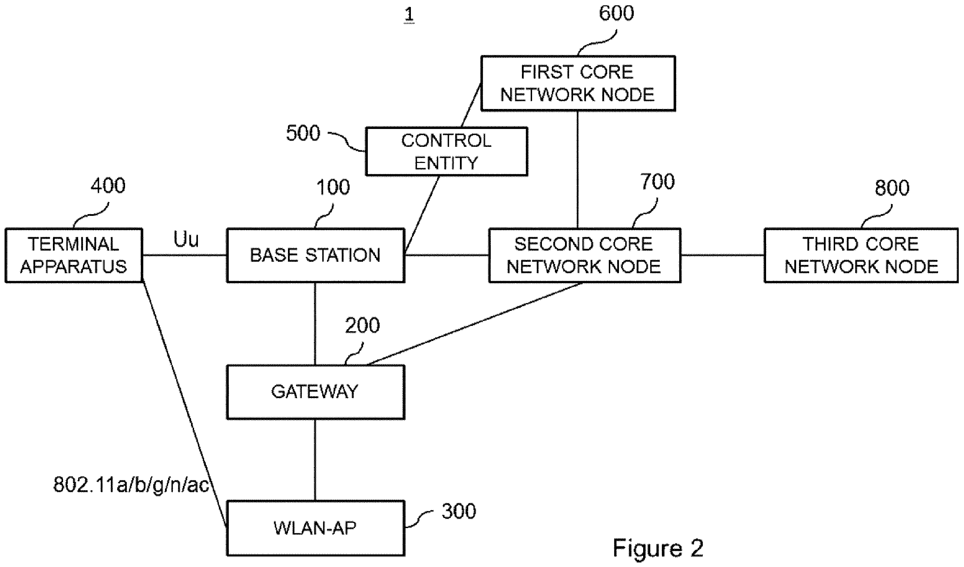

With reference to Figure 2, an example of a configuration of a system 1 according to example embodiments will be described. Figure 2 is an explanatory diagram illustrating an example of a schematic configuration of the system 1 according to the example embodiments of the present invention. Referring to Figure 2, the system 1 includes a base station 100, a gateway 200, a WLAN-AP 300, a terminal apparatus 400, a control entity 500, a first core network node 600, a second core network node 700 and a third core network node 800.

For example, the system 1 is a system that conforms to a standard of 3GPP. More specifically, the system 1 may be a system that conforms to LTE/LTE-Advanced and/or System Architecture Evolution (SAE). Alternatively, the system 1 may be a system that conforms to a fifth generation (5G) standard or Universal Mobile Telecommunications System (UMTS) that conforms to a third generation (3G) standard. The system 1 is, of course, not limited to such examples.

### (1) Base Station 100

The base station 100 is a node which performs wireless communication with terminal apparatuses and, in other words, is a radio access network (RAN) node. For example, the base station 100 may be an eNB, a generation Node B (gNB) in 5G, or a Node B and/or a radio network controller (RNC) in 3G. The base station 100 may include a plurality of units (or a plurality of nodes). The plurality of units (or plurality of nodes) may include a first unit (or first node) for performing processing of a higher protocol layer and a second unit (or second node) for performing processing of a lower protocol layer. As an example, the first unit may be referred to as Center/Central Unit (CU) and the second unit may be referred to as Distributed Unit (DU) or Access Unit (AU). As another example, the first unit may be referred to as Digital Unit (DU) and the second unit may be referred to as Radio Unit (RU) or Remote Unit (RU). The Digital Unit (DU) may be a Base Band Unit (BBU) and the RU may be a Remote Radio Head (RRH) or a Remote Radio Unit (RRU). Of course, the names of the first unit (or first node) and the second unit (or second node) are not limited to such examples. Alternatively, the base station 100 may be a single unit (or single node). In this case, the base station 100 may be one of the plurality of units (for example, one of the first and second units) and may be connected to another unit of the plurality of units (for example, the other one of the first and second units).

Among others, in the example embodiments, the base station 100 can transmit and receive data wirelessly to and from the terminal apparatus 400 (for example, by Uu Interface) as well as transmit and receive data to and from the terminal apparatus 400 through the gateway 200 and the WLAN-AP 300. Specifically, for example, the base station 100 can carry out operations of LTE/WLAN Radio Level Integration with IPsec Tunnel (LWIP) and/or LTE-WLAN Aggregation (LWA).

### (2) Gateway 200

The gateway 200 is a gateway that is used for communication through the WLAN and located between the base station 100 and WLAN-AP 300 and terminal apparatus 400.

For example, the gateway 200 is a security gateway for ensuring security of communication through the WLAN. For example, the gateway 200 provides a security tunnel for communication through the WLAN (for example, an IPsec tunnel). More specifically, for example, the gateway 200 is an LWIP-SeGW. Note that the gateway 200 is not necessarily limited to a security gateway such as the LWIP-SeGW and may be a WLAN termination (WT) of LWA, for example.

### (3) WLAN-AP 300

The WLAN-AP 300 is a WLAN access point and performs wireless communication with terminal apparatuses (for example, the terminal apparatus 400) according to one or more of IEEE 802.11 series (IEEE 802.11b/11a/11g/11n/11ac or the like).

### (4) Terminal Apparatus 400

The terminal apparatus 400 performs wireless communication with a base station. For example, the terminal apparatus 400 performs wireless communication with the base station 100 when it is located within a coverage area of the base station 100. For example, the terminal apparatus 400 is a UE.

Among others, in the example embodiments, the terminal apparatus 400 can transmit and receive data wirelessly to and from the base station 100 (for example, by Uu Interface) as well as transmit and receive data to and from the base station 100 through the WLAN-AP 300 and the gateway 200. Specifically, for example, the terminal apparatus 400 can carry out operations of LWIP and/or LWA.

### (5) Control Entity 500

The control entity 500 is a node of a radio access network (RAN) and located between the base station 100 and the first core network node 600.

Specifically, the control entity 500 is responsible for processing of C-plane and transmits control messages to the base station 100 and receives control messages from the base station 100. The control entity 500 also transmits control messages to the first core network node 600 and receives control messages from the first core network node 600. For example, the control entity 500 is an MCE.

### (6) First Core Network Node 600

The first core network node 600 is a core network node that is responsible for processing of C-plane. For example, the first core network node 600 transmits control messages to the control entity 500 and receives control messages from the control entity 500. The first core network node 600 also transmits control messages to the second core network node 700 and receives control messages from the second core network node 700. For example, the first core network node 600 is an MME.

### (7) Second Core Network Node 700

The second core network node 700 is a gateway for multicast or broadcast. For example, the second core network node 700 transmits control messages to the first core network node 600 and receives control messages from the first core network node 600. The second core network node 700 also transmits data packets (packets including data) to the base station 100 or the gateway 200. For example, the second core network node 700 is an MBMS-GW.

### (8) Third Core Network Node 800

The third core network node 800 is a gateway that performs management of multicast or broadcast. For example, the third core network node 800 transmits control messages to the second core network node 700 and receives control messages from the second core network node 700. The third core network node 800 also transmits data packets (packets including data) to the second core network node 700. For example, the third core network node 800 is a BM-SC.

### << 4. First Example Embodiment >>

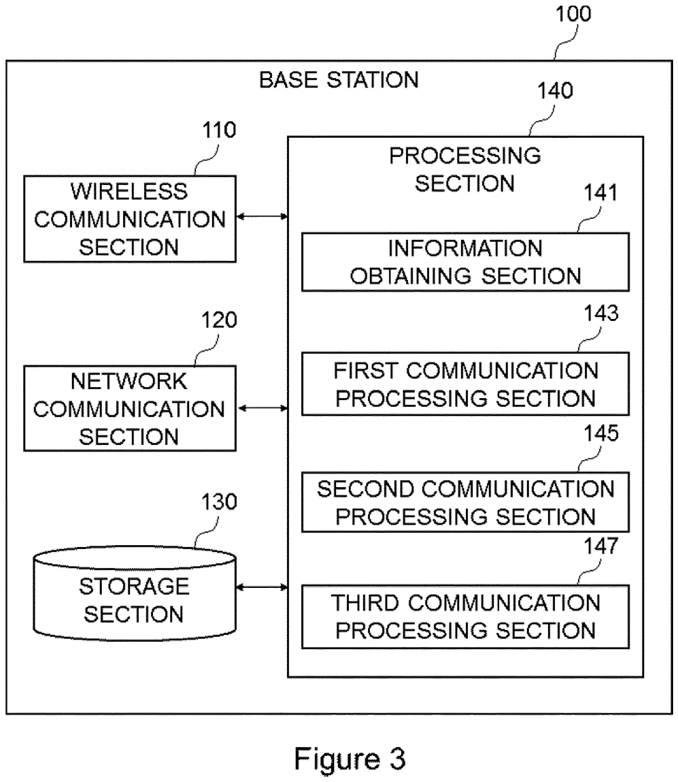

Next, with reference to Figures 3 to 9, the first example embodiment of the present invention will be described.

### < 4.1. Configuration of Base Station >

First, with reference to Figure 3, an example of a configuration of the base station 100 according to the first example embodiment will be described. Figure 3 is a block diagram illustrating an example of a schematic configuration of the base station 100 according to the first example embodiment. Referring to Figure 3, the base station 100 includes a wireless communication section 110, a network communication section 120, a storage section 130 and a processing section 140.

### (1) Wireless Communication Section 110

The wireless communication section 110 transmits and receives signals wirelessly. For example, the wireless communication section 110 receives a signal from a terminal apparatus and transmits a signal to a terminal apparatus.

### (2) Network Communication Section 120

The network communication section 120 receives a signal from the network and transmits a signal to the network.

### (3) Storage Section 130

The storage section 130 stores programs and parameters for operation of the base station 100 as well as various data temporarily or permanently.

### (4) Processing Section 140

The processing section 140 provides various functions of the base station 100. The processing section 140 includes an information obtaining section 141, a first communication processing section 143, a second communication processing section 145 and a third communication processing section 147. Note that the processing section 140 may further include another constituent element than these constituent elements. That is, the processing section 140 may perform operations other than the operations of these constituent elements. Specific actions of the information obtaining section 141, the first communication processing section 143, the second communication processing section 145 and the third communication processing section 147 will be described in detail later.

For example, the processing section 140 (the first communication processing section 143) communicates with the control entity 500 or the second core network node 700 via the network communication section 120. For example, the processing section 140 (the second communication processing section 145) communicates with the gateway 200 via the network communication section 120. For example, the processing section 140 (the third communication processing section 147) communicates with terminal apparatuses (for example, the terminal apparatus 400) via the wireless communication section 110.

### (5) Example Implementations

The wireless communication section 110 may be implemented with an antenna, a high frequency (Radio Frequency (RF)) circuit and the like. The network communication section 120 may be implemented with a network adapter, a network interface card or the like. The storage section 130 may be implemented with a memory (for example, non-volatile memory and/or volatile memory), hard disc and/or the like. The processing section 140 may be implemented with a Base Band (BB) processor, another processor and/or the like. The information obtaining section 141, the first communication processing section 143, the second communication processing section 145 and the third communication processing section 147 may be implemented with the same processor or with respective different processors. The above memory (the storage section 130) may be included in such a processor (a chip).

The base station 100 may include a memory that stores programs and one or more processors that are capable of executing the programs and the one or more processors may execute the operations of the processing section 140 (the information obtaining section 141, the first communication processing section 143, the second communication processing section 145 and the third communication processing section 147). The programs may be programs for causing a processor to execute the operations of the processing section 140 (the information obtaining section 141, the first communication processing section 143, the second communication processing section 145 and the third communication processing section 147).

### < 4.2. Configuration of Gateway >

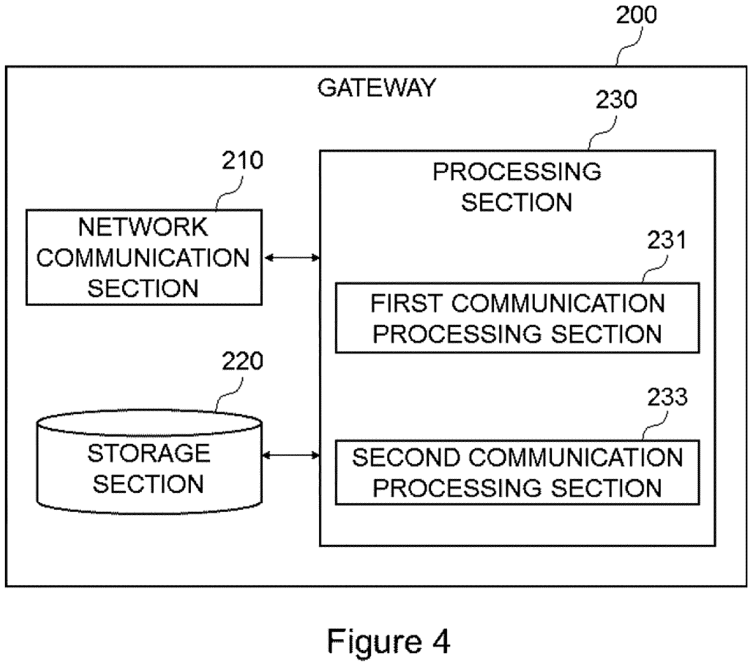

Next, with reference to Figure 4, an example of a configuration of the gateway 200 according to the first example embodiment will be described. Figure 4 is a block diagram illustrating an example of a schematic configuration of the gateway 200 according to the first example embodiment. Referring to Figure 4, the gateway 200 includes a network communication section 210, a storage section 220 and a processing section 230.

### (1) Network Communication Section 210

The network communication section 210 receives a signal from the network and transmits a signal to the network.

### (2) Storage Section 220

The storage section 220 stores programs and parameters for operation of the gateway 200 as well as various data temporarily or permanently.

### (3) Processing Section 230

The processing section 230 provides various functions of the gateway 200. The processing section 230 includes a first communication processing section 231 and a second communication processing section 233. Note that the processing section 230 may further include another constituent element than these constituent elements. That is, the processing section 230 may perform operations other than the operations of these constituent elements. Specific actions of the first communication processing section 231 and the second communication processing section 233 will be described in detail later.

For example, the processing section 230 communicates with other nodes via the network communication section 210. Specifically, for example, the processing section 230 (the first communication processing section 231) communicates with the base station 100 or the second core network node 700 via the network communication section 210. For example, the processing section 230 (the second communication processing section 233) communicates with the terminal apparatus 400 through the WLAN (the WLAN-AP 300) via the network communication section 210.

### (4) Example Implementations

The network communication section 210 may be implemented with a network adapter, a network interface card or the like. The storage section 220 may be implemented with a memory (for example, non-volatile memory and/or volatile memory), hard disc and/or the like. The processing section 230 may be implemented with a processor or the like. The first communication processing section 231 and the second communication processing section 233 may be implemented with the same processor or with respective different processors. The above memory (the storage section 220) may be included in such a processor (a chip).

The gateway 200 may include a memory that stores programs and one or more processors that are capable of executing the programs and the one or more processors may execute the operations of the processing section 230 (the first communication processing section 231 and the second communication processing section 233). The programs may be programs for causing a processor to execute the operations of the processing section 230 (the first communication processing section 231 and the second communication processing section 233).

### < 4.3. Configuration of Terminal Apparatus >

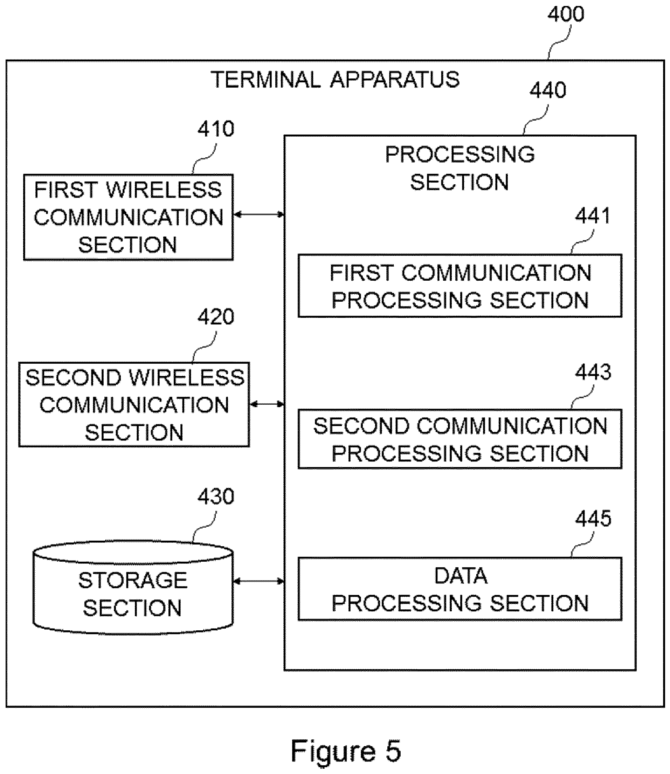

Next, with reference to Figure 5, an example of a configuration of the terminal apparatus 400 according to the first example embodiment will be described. Figure 5 is a block diagram illustrating an example of a schematic configuration of the terminal apparatus 400 according to the first example embodiment. Referring to Figure 5, the terminal apparatus 400 includes a first wireless communication section 410, a second wireless communication section 420, a storage section 430 and a processing section 440.

### (1) First Wireless Communication Section 410

The first wireless communication section 410 transmits and receives signals wirelessly. For example, the first wireless communication section 410 receives a signal from the WLAN-AP 300 and transmits a signal to the WLAN-AP 300.

### (2) Second Wireless Communication Section 420

The second wireless communication section 420 transmits and receives signals wirelessly. For example, the second wireless communication section 420 receives a signal from the base station 100 and transmits a signal to the base station 100.

### (3) Storage Section 430

The storage section 430 stores programs and parameters for operation of the terminal apparatus 400 as well as various data temporarily or permanently.

### (4) Processing Section 440

The processing section 440 provides various functions of the terminal apparatus 400. The processing section 440 includes a first communication processing section 441, a second communication processing section 443 and a data processing section 445. Note that the processing section 440 may further include another constituent element than these constituent elements. That is, the processing section 440 may perform operations other than the operations of these constituent elements. Specific actions of the first communication processing section 441, the second communication processing section 443 and the data processing section 445 will be described in detail later.

For example, the processing section 440 (the first communication processing section 441) communicates with the gateway 200 (or the base station 100) via the first wireless communication section 410. For example, the processing section 440 (the second communication processing section 443) communicates with the base station 100.

### (5) Example Implementations

Each of the first wireless communication section 410 and the second wireless communication section 420 may be implemented with an antenna, a high frequency (RF) circuit and the like. The storage section 430 may be implemented with a memory (for example, non-volatile memory and/or volatile memory), hard disc and/or the like. The processing section 440 may be implemented with a Base Band (BB) processor, another processor and/or the like. The first communication processing section 441, the second communication processing section 443 and the data processing section 445 may be implemented with the same processor or with respective different processors. The above memory (the storage section 430) may be included in such a processor (a chip).

The terminal apparatus 400 may include a memory that stores programs and one or more processors that are capable of executing the programs and the one or more processors may execute the operations of the processing section 440 (the first communication processing section 441, the second communication processing section 443 and the data processing section 445). The programs may be programs for causing a processor to execute the operations of the processing section 440 (the first communication processing section 441, the second communication processing section 443 and the data processing section 445).

### < 4.4. Configuration of Control Entity >

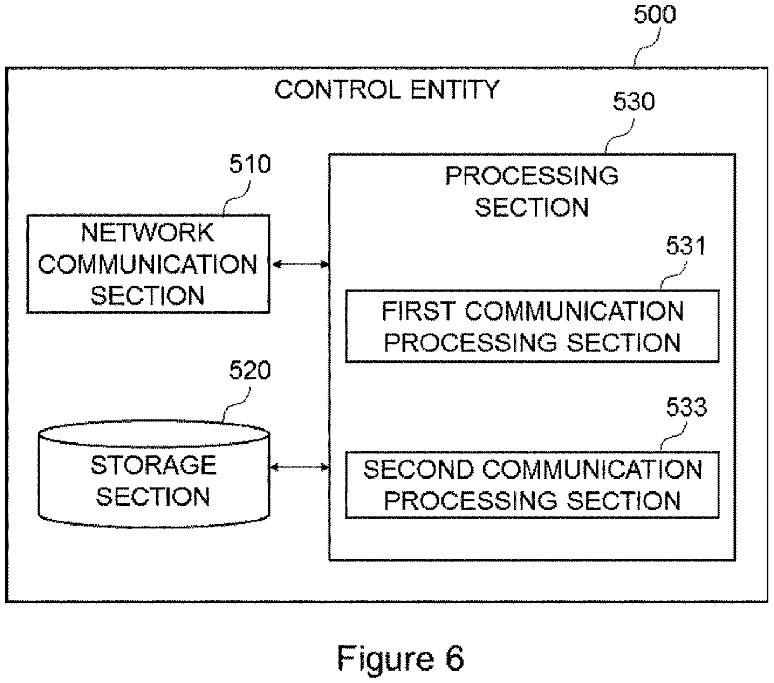

Next, with reference to Figure 6, an example of a configuration of the control entity 500 according to the first example embodiment will be described. Figure 6 is a block diagram illustrating an example of a schematic configuration of the control entity 500 according to the first example embodiment. Referring to Figure 6, the control entity 500 includes a network communication section 510, a storage section 520 and a processing section 530.

### (1) Network Communication Section 510

The network communication section 510 receives a signal from the network and transmits a signal to the network.

### (2) Storage Section 520

The storage section 520 stores programs and parameters for operation of the control entity 500 as well as various data temporarily or permanently.

### (3) Processing Section 530

The processing section 530 provides various functions of the control entity 500. The processing section 530 includes a first communication processing section 531 and a second communication processing section 533. Note that the processing section 530 may further include another constituent element than these constituent elements. That is, the processing section 530 may perform operations other than the operations of these constituent elements. Specific actions of the first communication processing section 531 and the second communication processing section 533 will be described in detail later.

For example, the processing section 530 communicates with other nodes via the network communication section 510. Specifically, for example, the processing section 530 (the first communication processing section 531) communicates with the base station 100 via the network communication section 510. For example, the processing section 530 (the second communication processing section 533) communicates with the first core network node 600 via the network communication section 510.

### (4) Example Implementations

The network communication section 510 may be implemented with a network adapter, a network interface card or the like. The storage section 520 may be implemented with a memory (for example, non-volatile memory and/or volatile memory), hard disc and/or the like. The processing section 530 may be implemented with a processor or the like. The first communication processing section 531 and the second communication processing section 533 may be implemented with the same processor or with respective different processors. The above memory (the storage section 520) may be included in such a processor (a chip).

The control entity 500 may include a memory that stores programs and one or more processors that are capable of executing the programs and the one or more processors may execute the operations of the processing section 530 (the first communication processing section 531 and the second communication processing section 533). The programs may be programs for causing a processor to execute the operations of the processing section 530 (the first communication processing section 531 and the second communication processing section 533).

### < 4.5. Configuration of First Core Network Node >

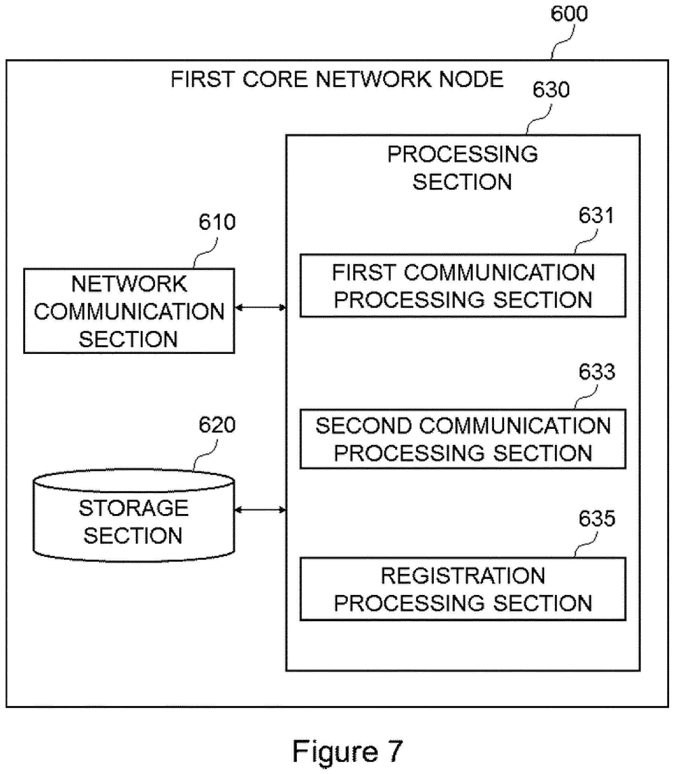

Next, with reference to Figure 7, an example of a configuration of the first core network node 600 according to the first example embodiment will be described. Figure 7 is a block diagram illustrating an example of a schematic configuration of the first core network node 600 according to the first example embodiment. Referring to Figure 7, the first core network node 600 includes a network communication section 610, a storage section 620 and a processing section 630.

### (1) Network Communication Section 610

The network communication section 610 receives a signal from the network and transmits a signal to the network.

### (2) Storage Section 620

The storage section 620 stores programs and parameters for operation of the first core network node 600 as well as various data temporarily or permanently.

### (3) Processing Section 630

The processing section 630 provides various functions of the first core network node 600. The processing section 630 includes a first communication processing section 631, a second communication processing section 633 and a registration processing section 635. Note that the processing section 630 may further include another constituent element than these constituent elements. That is, the processing section 630 may perform operations other than the operations of these constituent elements. Specific actions of the first communication processing section 631, the second communication processing section 633 and the registration processing section 635 will be described in detail later.

For example, the processing section 630 communicates with other nodes via the network communication section 610. Specifically, for example, the processing section 630 (the first communication processing section 631) communicates with the control entity 500 via the network communication section 610. For example, the processing section 630 (the second communication processing section 633) communicates with the second core network node 700 via the network communication section 610.

### (4) Example Implementations

The network communication section 610 may be implemented with a network adapter, a network interface card or the like. The storage section 620 may be implemented with a memory (for example, non-volatile memory and/or volatile memory), hard disc and/or the like. The processing section 630 may be implemented with a processor or the like. The first communication processing section 631, the second communication processing section 633 and the registration processing section 635 may be implemented with the same processor or with respective different processors. The above memory (the storage section 620) may be included in such a processor (a chip).

The first core network node 600 may include a memory that stores programs and one or more processors that are capable of executing the programs and the one or more processors may execute the operations of the processing section 630 (the first communication processing section 631, the second communication processing section 633 and the registration processing section 635). The programs may be programs for causing a processor to execute the operations of the processing section 630 (the first communication processing section 631, the second communication processing section 633 and the registration processing section 635).

### < 4.6. Technical Features >

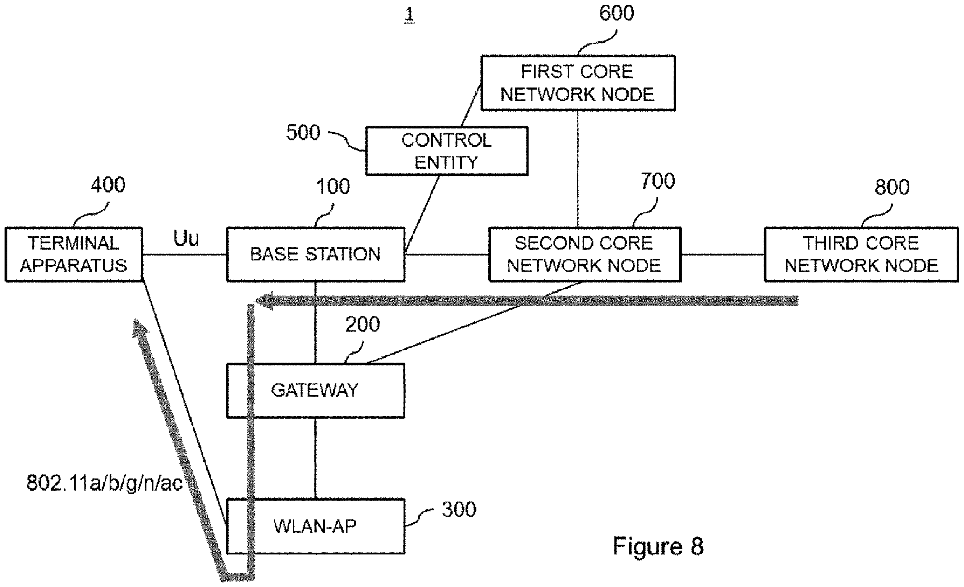

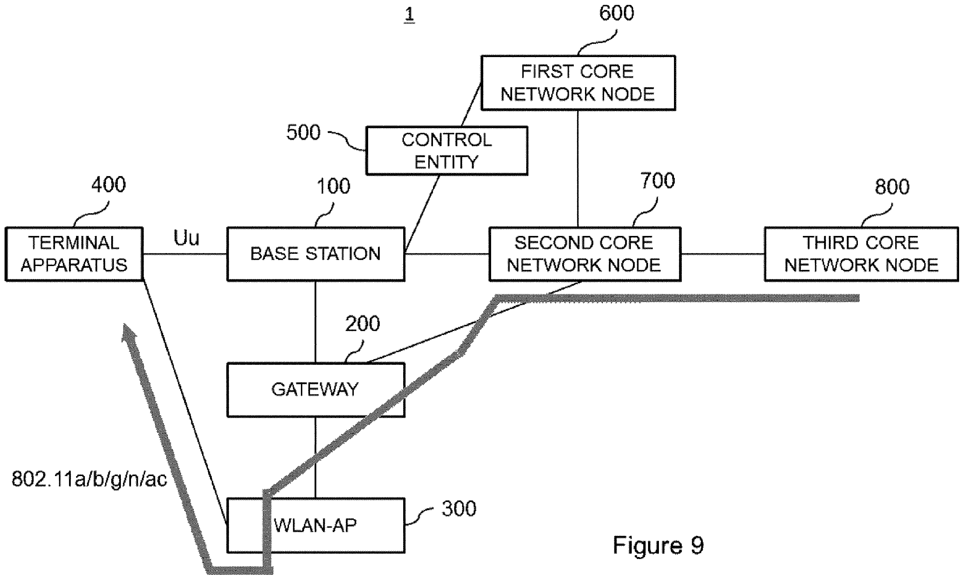

Next, with reference to Figures 8 and 9, technical features of the first example embodiment will be described.

### (1) Registration of Transmission Area

### - Base Station

The base station 100 (the information obtaining section 141) obtains registration information for registering a wireless local area network as transmission area of multicast data or broadcast data. Then, the base station 100 (the first communication processing section 143) transmits the registration information to the control entity 500. The base station 100 may transmit an MBMS SESSION UPDATE RESPONSE message including the registration information to the control entity 500 as a response message to a "MBMS SESSION UPDATE REQUEST" message transmitted from the control entity 500. Alternatively, the base station 100 may transmit an "M2 SETUP REQUEST or eNB MBMS Configuration data Item" message including the registration information to the control entity 500. Further, the base station 100 may select a cell which can join transmission scope of multicast data or broadcast data to transmit it as the registration information to the control entity 500.

### - Control Entity

The control entity 500 (the first communication processing section 531) receives the registration information from the base station 100. Then, the control entity 500 (the second communication processing section 533) transmits the registration information to the core network node (the first core network node 600). The control entity 500 (the storage section 520) stores the registration information.

### - First Core Network Node

The first core network node 600 (the first communication processing section 631) receives the registration information. Then, the first core network node 600 (the registration processing section 635) registers, on the basis of the registration information, the wireless local area network as the transmission area of the multicast data or the broadcast data. That is, the first core network node 600 (the storage section 620) stores the registration information. The first core network node 600 (the second communication processing section 633) transmits, to the second core network node 700, information indicating that the wireless local area network has been registered as the transmission area. Herein, the information indicating that the wireless local area network has been registered as the transmission area is, for example, an IP address of the wireless local area network, an identifier of the base station 100 or the like.

### - Multicast Data, Broadcast Data

Multicast data or broadcast data includes data of Earthquake and Tsunami Warning System (ETWS), Multimedia Broadcast Multicast Services (MBMS) or evolved Multimedia Broadcast Multicast Service (eMBMS).

### - Registration Information

The registration information, for example, includes an identifier of the wireless local area network for registering the wireless local area network as the transmission area of the multicast data or the broadcast data. Specifically, the identifier of the wireless local area network includes an identifier of an access point or an access controller and is, for example, a Service Set Identifier (SSID), a Basic Service Set Identifier (BSSID) or an Extended Service Set Identifier (ESSID). The identifier of the access point or the access controller may a Medium Access Control (MAC) address. The registration information may include information indicating that the wireless local area network (the gateway 200 or the WLAN-AP 300) is connected to the base station 100.

The registration information may be information for registering the wireless local area network as a transmission area not only of the multicast data or the broadcast data but also of non-MBMS services (for example, unicast) data. This will provide, through the wireless local area network, a cell that supports both the MBMS and unicast data transmissions through the wireless local area network.

### (2) Join Process of Transmission Scope

Upon receiving the information indicating that the wireless local area network has been registered as the transmission area from the first core network node 600, the second core network node 700 performs the following processing to let the wireless local area network join the transmission scope of the multicast data or the broadcast data.

Specifically, the second core network node 700 adds the wireless local area network to a transmission group of the multicast data or the broadcast data. Then, the second core network node 700 transmits, to the first core network node 600, an IP address (for example, an IP multicast address) for the multicast or the broadcast. Next, the first core network node 600 transmits the IP address to the control entity 500. Next, the control entity 500 transmits the IP address to the base station 100. The base station 100 receives the IP address and, as a result, the wireless local area network joins the transmission scope.

### (3) Transmission of Multicast Data or Broadcast

The second core network node 700 receives multicast data or broadcast data from the third core network node 800 and transmits the multicast data or the broadcast data to the base station 100 using the IP address as a transmission source address.

### (4) Transfer Process to Wireless Local Area Network

### - Base Station

The base station 100 (the first communication processing section 143) receives multicast data or broadcast data transmitted from a core network (the second core network node 700). Specifically, the base station 100 (the first communication processing section 143) checks whether the transmission source address of incoming data from the core network side is the above-mentioned IP address and only receives the data with the above-mentioned IP address as the transmission source address, that is, receives only the multicast data or the broadcast data and drops the other data.

Then, the base station 100 (the second communication processing section 145) transmits the received multicast data or broadcast data to the terminal apparatus 400 through the wireless local area network (the gateway 200, the WLAN-AP 300).

### - Gateway

The gateway 200 (the first communication processing section 231) receives the multicast data or the broadcast data transmitted via the base station 100 from the core network (the second core network node 700). Then, the gateway 200 (the second communication processing section 233) transmits the received multicast data or broadcast data to the terminal apparatus 400 through the wireless local area network (the WLAN-AP 300).

### (5) Transmission of Control Information

The base station 100 (the third communication processing section 147) transmits, directly to the terminal apparatus 400 using the Uu interface, control information related to transmission of the multicast data or the broadcast data. Herein, the control information may be, for example, a timing when the multicast data or the broadcast data is transmitted to the terminal apparatus 400 though the wireless local area network, a channel of the wireless local area network used for transmitting the multicast data or the broadcast data (a WLAN channel) or the like.

### (6) Reception Process by Terminal Apparatus

The terminal apparatus 400 (the first communication processing section 441) receives multicast data or broadcast data transmitted from the core network through a wireless local area network (the gateway 200, the WLAN-AP 300).

Specifically, the terminal apparatus 400 (the first communication processing section 441) receives the multicast data or the broadcast data using the control information received from the base station 100, that is, according to the timing, the channel or the like indicated by the control information. Note that the terminal apparatus 400 may not utilize the control information, but execute an application program for multicast service or broadcast service and access the wireless local network side to receive the multicast data or the broadcast data periodically (for example, every 100 msec), for example.

Then, the terminal apparatus 400 (the data processing section 445) performs processing for the multicast data or the broadcast data.

Specifically, the terminal apparatus 400 (the data processing section 445) checks whether the multicast data or the broadcast data is targeted data for the terminal apparatus 400. Alternatively, the terminal apparatus 400 (the data processing section 445) executes the application program for multicast service or broadcast service to reproduce the multicast data or the broadcast data (reproduce a movie, display a message or the like). The multicast service or broadcast service may correspond to the multicast data or the broadcast data received by the terminal apparatus 400.

### (7) Flow of Process

With reference to Figure 8, a process to transmit MBMS data will be described as an example of a process according to the first example embodiment. Figure 8 is a block diagram for describing an example of a schematic flow of a process according to the first example embodiment.

The process assumes that the MBMS data has been allocated an IP address (IP multicast address) for multicast or broadcast by the second core network node 700 (MBMS-GW) and the third core network node 800 (BM-SC) having cooperated with each other. In addition, a join process to add the wireless local area network to a transmission scope (MBSFN area) of multicast or broadcast has been performed and the base station 100 (eNB) has obtained the IP address (IP multicast address) from the second core network node 700 (MBMS-GW) via the first core network node 600 (MME) and the control entity 500 (MCE).

First, the third core network node 800 (BM-SC) transmits multicast data or broadcast data (MBMS data) to the second core network node 700 (MBMS-GW).

Next, the second core network node 700 (MBMS-GW) transmits, to the base station 100 (eNB), the multicast data or broadcast data (MBMS data) received from the third core network node 800 (BM-SC).

Next, the base station 100 (eNB) receives the multicast data or broadcast data (MBMS data) transmitted from the second core network node 700 (MBMS-GW) based on the IP address (IP multicast address) received from the control entity 500 (MCE).

Specifically, the base station 100 (eNB) judges (checks) whether the transmission source address of incoming data from the second core network node 700 (MBMS-GW) is an IP address (IP multicast) that is associated with a service for which a wireless local area network has been registered as a transmission area. Then, the base station 100 (eNB) receives the data of which transmission source address is such an IP address, that is, the multicast data or broadcast data (MBMS data) transmitted from the second core network node 700 (MBMS-GW) and transmits the received multicast data or broadcast data (MBMS data) to the gateway 200 (LWIP-SeGW) used for communication through the wireless local area network.

Next, the gateway 200 (LWIP-SeGW) transmits the multicast data or broadcast data (MBMS data) received from the base station 100 (eNB) to the terminal apparatus 400 (UE) via the WLAN-AP 300.

Next, the terminal apparatus 400 (UE) receives, from the WLAN-AP 300, the multicast data or broadcast data (MBMS data) that has been transmitted from the core network. Then, the terminal apparatus 400 (UE) performs processing for the multicast data or broadcast data (MBMS data).

### < 4.7. Example Alterations >

Next, example alterations of the first example embodiment will be described.

First, the multicast data or broadcast data transmitted from the second core network node is not necessarily limited to the case of being transmitted via the base station 100 as illustrated in Figure 8.

Figure 9 is a block diagram for describing an example of a schematic flow of a process according to an example alteration of the first example embodiment, for example. As illustrated in Figure 9, the second core network node 700 (MBMS-GW) may transmit the multicast data or broadcast data (MBMS data) directly to the gateway 200 (LWIP-SeGW) without passing through the base station 100. In the process illustrated in Figure 9, the gateway 200 performs processing as follows.

That is, the gateway 200 (the first communication processing section 231) receives the multicast data or broadcast data transmitted from the core network (the second core network node 700). Specifically, the gateway 200 (the first communication processing section 231) obtains an IP address for multicast or broadcast from the base station 100 in advance. Then, the gateway 200 (the first communication processing section 231) checks whether the transmission source address of incoming data from the core network side is the above-mentioned IP address and only receives the data with the above-mentioned IP address as the transmission source address, that is, receives only the multicast data or the broadcast data and drops the other data. Then, the gateway 200 (the second communication processing section 233) transmits the received multicast data or the broadcast data to the terminal apparatus 400 through the wireless local area network (WLAN-AP 300).

In addition, the multicast data or the broadcast data is not limited to the case of being transmitted to the terminal apparatus 400 (UE) only through the wireless local area network as illustrated in Figures 8 and 9.

For example, in the network configuration illustrated in Figure 8, the base station 100 (eNB) may split the multicast data or broadcast data (MBMS data) to transmit it to the terminal apparatus 400 (UE) through two routes in total, i.e., through the wireless local area network and through the Uu interface.

### < 4.8. Conclusion >

The first example embodiment has been described above. According to the first example embodiment, a wireless local area network can be registered as a transmission area of multicast data or broadcast data by transmitting registration information from the base station 100 to the first core network node 600 via the control entity 500. In this way, according to the first example embodiment, it will be possible to provide multicast service or broadcast service, that has been provided only using the Uu interface so far, using the wireless local area network.

In addition, according to the first example embodiment, the multicast data or the broadcast data originated from the core network is transmitted to the terminal apparatus 400 through a wireless local area network. This makes it possible to transmit the multicast data or the broadcast data from the core network more flexibly to the terminal apparatus 400, which includes, for example, mitigating processing load of the base station 100, causing an arbitrary multicast service (for example, IP multicast address) to pass through the wireless local area network, or the like.

By the way, when transmitting multicast data or broadcast data by the Uu Interface, it is required to transmit the data in highly accurate synchronization across transmission areas (cells, base stations). As such, for example, the second core network node (MBMS-GW) is required to specify a transmission area of which latency is the largest within a transmission group (cells, base stations) to set timestamps for synchronization based on the specified transmission area.

Meanwhile, according to the first example embodiment, for example, it is possible to restrict a transmission area of multicast data or broadcast data to terminal apparatuses (users) served within an area of a wireless local area network by restricting the wireless local area network to indoor, specific spot or the like. In this way, according to the first example embodiment, the above-mentioned highly accurate synchronization processing will be unnecessary between the transmission area of the wireless local area network and other transmission areas (cells). That is, according to the first example embodiment, for example, the second core network node (MBMS-GW) can set the timestamps without considering the transmission area of the wireless local area network.

### << 5. Second Example Embodiment >>

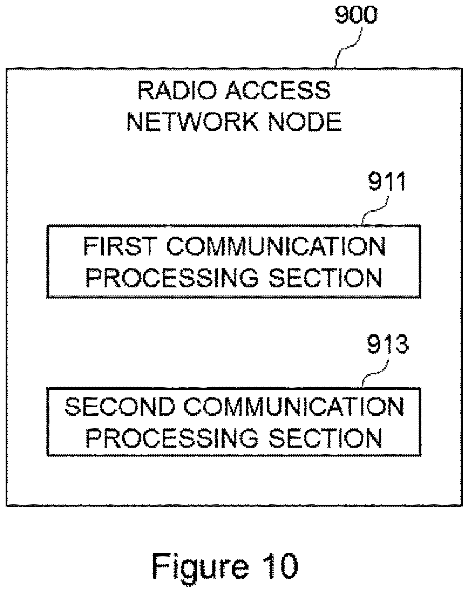

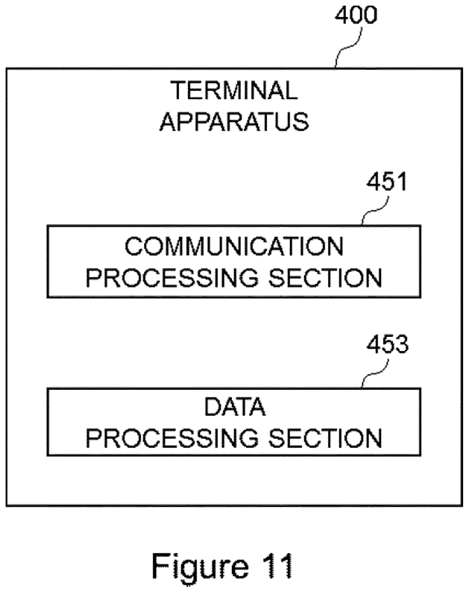

Next, with reference to Figures 10 and 11, the second example embodiment of the present invention will be described. The foregoing first example embodiment is a concrete example embodiment whereas the second example embodiment is a more generalized example embodiment.

### < 5.1. Configuration of Radio Access Network Node >

First, with reference to Figure 10, an example of a configuration of a radio access network node 900 according to the second example embodiment will be described. Figure 10 is a block diagram illustrating an example of a schematic configuration of the radio access network node 900 according to the second example embodiment. Referring to Figure 10, the radio access network node 900 includes a first communication processing section 911 and a second communication processing section 913.

Specific actions of the first communication processing section 911 and the second communication processing section 913 will be described later.

The first communication processing section 911 and the second communication processing section 913 may be implemented with a Base Band (BB) processor, another processor and/or the like. The first communication processing section 911 and the second communication processing section 913 may be implemented with the same processor or with respective different processors.

The radio access network node 900 may include a memory that stores programs and one or more processors that are capable of executing the programs and the one or more processors may execute the operations of the first communication processing section 911 and the second communication processing section 913. The programs may be programs for causing a processor to execute the operations of the first communication processing section 911 and the second communication processing section 913.

### < 5.2. Configuration of Terminal Apparatus >

First, with reference to Figure 11, an example of a configuration of a terminal apparatus 400 according to the second example embodiment will be described. Figure 11 is a block diagram illustrating an example of a schematic configuration of the terminal apparatus 400 according to the second example embodiment. Referring to Figure 11, the terminal apparatus 400 includes a communication processing section 451 and a data processing section 453.

Specific actions of the communication processing section 451 and the data processing section 453 will be described later.

The communication processing section 451 and the data processing section 453 may be implemented with a processor or the like. The communication processing section 451 and the data processing section 453 may be implemented with the same processor or with respective different processors.

The terminal apparatus 400 may include a memory that stores programs and one or more processors that are capable of executing the programs and the one or more processors may execute the operations of the communication processing section 451 and the data processing section 453. The programs may be programs for causing a processor to execute the operations of the communication processing section 451 and the data processing section 453.

### < 5.3. Technical Features >

Next, technical features of the second example embodiment will be described.

In the second example embodiment, the radio access network node 900 (the first communication processing section 911) receives multicast data or broadcast data transmitted from a core network. Then, the radio access network node 900 (the second communication processing section 913) transmits the multicast data or the broadcast data to the terminal apparatus 400 through a wireless local area network.

Meanwhile, the terminal apparatus 400 (the communication processing section 451) receives the multicast data or the broadcast data transmitted from the core network through the wireless local area network. Then, the terminal apparatus 400 (the data processing section 453) performs processing for the multicast data or the broadcast data.

Descriptions for transmission and reception of multicast data and broadcast data and process flows thereof are, for example, the same as the descriptions for those in the first example embodiment except for difference in some reference numerals. Therefore, duplicate descriptions are herein omitted.

The second example embodiment has been described above. According to the second example embodiment, for example, it will be possible to transmit multicast data or broadcast data from a core network more flexibly to the terminal apparatus 400.

### < 6. Other Modes >

Though example embodiments of the present invention have been described herein, the present invention is not limited to these example embodiments. It will be understood by those of ordinary skill in the art that these example embodiments are illustrative only and that various alterations can be done without departing from the scope of the present invention.

Moreover, an apparatus (for example, one or more apparatuses (or units) out of a plurality of apparatuses (or units) comprised in the radio access network node or a module for one of the plurality of apparatuses (or units)) including constituent elements of the radio access network node described in the present specification (for example, the first communication processing section and/or the second communication processing section) may be provided. An apparatus (for example, a module for the terminal apparatus) including constituent elements of the terminal apparatus described in the present specification (for example, the communication processing section and/or the check processing section) may be provided. In addition, methods including processes of such constituent elements may be provided, and programs for causing processors to execute processes of such constituent elements may be provided. Furthermore, computer-readable non-transitory recording media (non-transitory computer readable media) having recorded thereon such programs may be provided. It is apparent that such apparatuses, methods, programs and computer-readable non-transitory recording media are also included in the present invention.

### Industrial Applicability

In a mobile communication system, it will be possible to transmit multicast data or broadcast data from a core network more flexibly to terminal apparatuses.

### Reference Signs List

- 1: System
- 100: Base Station
- 141: Information Obtaining Section
- 143, 441, 911: First Communication Processing Section
- 145, 443, 913: Second Communication Processing Section
- 147: Third Communication Processing Section
- 200: Gateway
- 300: WLAN-AP (Wireless Local Area Network Access Point)
- 400: Terminal Apparatus
- 451: Communication Processing Section
- 445, 453: Data Processing Section
- 500: Control Entity
- 600: First Core Network Node
- 700: Second Core Network Node
- 800: Third Core Network Node
- 900: Radio Access Network Node

## Claims

1. A radio access network node (100), said radio access network node being a base station, comprising:
a first communication processing section (143, 441, 911) configured to receive multicast data or broadcast data transmitted from a core network;
a second communication processing section (145, 443, 913) configured to transmit the multicast data or the broadcast data to a terminal apparatus (400) through a wireless local area network; and
a third communication processing section (147) configured to transmit, directly to the terminal apparatus (400), control information related to transmission of the multicast data or the broadcast data, wherein the control information is:
a timing when the multicast data or the broadcast data is transmitted to the terminal apparatus (400) through the wireless local area network; or
a channel of the wireless local area network used for transmitting the multicast data or the broadcast data.

2. The radio access network node (100) according to claim 1, wherein the base station is an evolved Node B, eNB

3. The radio access network node (100) according to any one of claims 1 or 2, further comprising
an information obtaining section (141) configured to obtain registration information for registering the wireless local area network as transmission area of the multicast data or the broadcast data,
wherein the first communication processing section (143, 441, 911) is configured to transmit the registration information to a control entity.

4. The radio access network node (100) according to claim 3, wherein the registration information includes an identifier of the wireless local area network.

5. A terminal apparatus (400) comprising:
a first communication processing section (443) configured to receive, directly from a base station, control information related to transmission of multicast data or broadcast data, wherein the control information is:
a timing when the multicast data or the broadcast data is transmitted to the terminal apparatus (400) through a wireless local area network; or
a channel of the wireless local area network used for transmitting the multicast data or the broadcast data;
a second communication processing section (441) configured to receive, from a wireless local area network access point (300), multicast data or broadcast data transmitted from a core network through the wireless local area network, wherein the first communication processing section (441) is configured to receive the multicast data or the broadcast data according to the control information; and
a data processing section (440) configured to perform processing for the multicast data or the broadcast data.

6. A method performed by a radio access network node (100), said radio access network node being a base station, said method comprising:
receiving multicast data or broadcast data transmitted from a core network;
transmitting the multicast data or the broadcast data to a terminal apparatus (400) through a wireless local area network ; and
transmitting, directly to the terminal apparatus (400), control information related to transmission of the multicast data or the broadcast data, wherein the control information is:
a timing when the multicast data or the broadcast data is transmitted to the terminal apparatus (400) through the wireless local area network ; or
a channel of the wireless local area network used for transmitting the multicast data or the broadcast data.

7. A method performed by a terminal apparatus (400), said method comprising:
receiving, directly from a base station, control information related to transmission of multicast data or broadcast data, wherein the control information is:
a timing when the multicast data or the broadcast data is transmitted to the terminal apparatus (400) through a wireless local area network ; or
a channel of the wireless local area network used for transmitting the multicast data or the broadcast data ;
receiving, from a wireless local area network access point (300), multicast data or broadcast data transmitted from a core network through the wireless local area network, wherein the multicast data or the broadcast data is received according to the control information; and
performing processing for the multicast data or the broadcast data.

8. A computer program comprising instructions which, when the program is executed by a radio access network node according to claim 1, cause the radio access network node to:
receive multicast data or broadcast data transmitted from a core network;
transmit the multicast data or the broadcast data to a terminal apparatus through a wireless local area network ; and
transmit, directly to the terminal apparatus (400), control information related to transmission of the multicast data or the broadcast data, wherein the control information is:
a timing when the multicast data or the broadcast data is transmitted to the terminal apparatus (400) through the wireless local area network ; or
a channel of the wireless local area network used for transmitting the multicast data or the broadcast data.

9. A computer program comprising instructions which, when the program is executed by a terminal apparatus according to claim 5, cause the radio access network node to:
receive, directly from a base station, control information related to transmission of multicast data or broadcast data, wherein the control information is:
a timing when the multicast data or the broadcast data is transmitted to the terminal apparatus (400) through a wireless local area network ; or
a channel of the wireless local area network used for transmitting the multicast data or the broadcast data;
receive, from a wireless local area network access point (300), multicast data or broadcast data transmitted from a core network through the wireless local area network, wherein the multicast data or the broadcast data is received according to the control information; and
perform processing for the multicast data or the broadcast data.

## Patentansprüche

1. Funkzugangsnetzwerkknoten (100), wobei der Funkzugangsnetzwerkknoten eine Basisstation ist, mit:
einem ersten Kommunikationsverarbeitungsabschnitt (143, 441, 911), der dafür konfiguriert ist, Multicast-Daten oder Broadcast-Daten zu empfangen, die von einem Kernnetzwerk übertragen werden;
einem zweiten Kommunikationsverarbeitungsabschnitt (145, 443, 913), der dafür konfiguriert ist, die Multicast-Daten oder die Broadcast-Daten über ein drahtloses lokales Netzwerk an ein Endgerät (400) zu übertragen; und
einem dritten Kommunikationsverarbeitungsabschnitt (147), der dafür konfiguriert ist, Steuerinformation, die mit der Übertragung der Multicast-Daten oder der Broadcast-Daten in Beziehung steht, direkt an das Endgerät (400) zu übertragen, wobei die Steuerinformation aufweist:
einen Zeitpunkt, zu dem die Multicast-Daten oder die Broadcast-Daten über das drahtlose lokale Netzwerk an das Endgerät (400) übertragen werden; oder
einen Kanal des drahtlosen lokalen Netzwerks, der zum Übertragen der Multicast-Daten oder der Broadcast-Daten verwendet wird.

2. Funkzugangsnetzwerkknoten (100) nach Anspruch 1, wobei die Basisstation ein Evolved Node B, eNB ist.

3. Funkzugangsnetzwerkknoten (100) nach einem der Ansprüche 1 oder 2, ferner mit:
einem Informationsgewinnungsabschnitt (141), der dafür konfiguriert ist, Registrierungsinformation zum Registrieren des drahtlosen lokalen Netzwerks als Übertragungsbereich der Multicast-Daten oder der Broadcast-Daten zu erhalten,
wobei der erste Kommunikationsverarbeitungsabschnitt (143, 441, 911) dafür konfiguriert ist, die Registrierungsinformation an eine Steuerinstanz zu übertragen.

4. Funkzugangsnetzwerkknoten (100) nach Anspruch 3, wobei die Registrierungsinformation eine Identifizierung des drahtlosen lokalen Netzwerks aufweist.

5. Endgerät (400) mit:
einem ersten Kommunikationsverarbeitungsabschnitt (443), der dafür konfiguriert ist, Steuerinformation, die mit einer Übertragung von Multicast-Daten oder Broadcast-Daten in Beziehung steht, direkt von einer Basisstation zu empfangen, wobei die Steuerinformation aufweist:
einen Zeitpunkt, zu dem die Multicast-Daten oder die Broadcast-Daten über das drahtlose lokale Netzwerk an das Endgerät (400) übertragen werden; oder
einen Kanal des drahtlosen lokalen Netzwerks, der zum Übertragen der Multicast-Daten oder der Broadcast-Daten verwendet wird;
einem zweiten Kommunikationsverarbeitungsabschnitt (441), der dafür konfiguriert ist, von einem Zugriffspunkt (300) des drahtlosen lokalen Netzwerks Multicast-Daten oder Broadcast-Daten zu empfangen, die von einem Kernnetzwerk über das drahtlose lokale Netzwerk übertragen werden, wobei der erste Kommunikationsverarbeitungsabschnitt (441) dafür konfiguriert ist, die Multicast-Daten oder die Broadcast-Daten gemäß der Steuerinformation zu empfangen; und
einem Datenverarbeitungsabschnitt (440), der dafür konfiguriert ist, eine Verarbeitung für die Multicast-Daten oder die Broadcast-Daten auszuführen.

6. Verfahren, das durch einen Funkzugangsnetzwerkknoten (100) ausgeführt wird, wobei der Funkzugangsnetzwerkknoten eine Basisstation ist, wobei das Verfahren die Schritte aufweist:
Empfangen von Multicast-Daten oder Broadcast-Daten, die von einem Kernnetzwerk übertragen werden;
Übertragen der Multicast-Daten oder der Broadcast-Daten an ein Endgerät (400) über ein drahtloses lokales Netzwerk; und
Übertragen von Steuerinformation, die mit einer Übertragung der Multicast-Daten oder der Broadcast-Daten in Beziehung steht, direkt an das Endgerät (400), wobei die Steuerinformation beinhaltet:
einen Zeitpunkt, zu dem die Multicast-Daten oder die Broadcast-Daten über das drahtlose lokale Netzwerk an das Endgerät (400) übertragen werden; oder
einen Kanal des drahtlosen lokalen Netzwerks, der zum Übertragen der Multicast-Daten oder der Broadcast-Daten verwendet wird.

7. Verfahren, das durch ein Endgerät (400) ausgeführt wird, wobei das Verfahren die Schritte aufweist:
Empfangen von Steuerinformation, die mit einer Übertragung von Multicast-Daten oder Broadcast-Daten in Beziehung steht, direkt von einer Basisstation, wobei die Steuerinformation aufweist:
einen Zeitpunkt, zu dem die Multicast-Daten oder die Broadcast-Daten über das drahtlose lokale Netzwerk an das Endgerät (400) übertragen werden; oder
einen Kanal des drahtlosen lokalen Netzwerks, der zum Übertragen der Multicast-Daten oder der Broadcast-Daten verwendet wird;
Empfangen von Multicast-Daten oder Broadcast-Daten, die von einem Kernnetzwerk über das drahtlose lokale Netzwerk übertragen werden, von einem Zugriffspunkt (300) des drahtlosen lokalen Netzwerks, wobei die Multicast-Daten oder die Broadcast-Daten gemäß der Steuerinformation empfangen werden; und
Ausführen einer Verarbeitung für die Multicast-Daten oder die Broadcast-Daten.

8. Computerprogramm mit Anweisungen, die, wenn das Programm durch einen Funkzugangsnetzwerkknoten gemäß Anspruch 1 ausgeführt wird, den Funkzugangsnetzwerkknoten veranlassen:
Multicast-Daten oder Broadcast-Daten zu empfangen, die von einem Kernnetzwerk übertragen werden;
die Multicast-Daten oder die Broadcast-Daten über ein drahtloses lokales Netzwerk an ein Endgerät zu übertragen; und
Steuerinformation, die mit der Übertragung der Multicast-Daten oder der Broadcast-Daten in Beziehung steht, direkt an das Endgerät (400) zu übertragen, wobei die Steuerinformation aufweist:
einen Zeitpunkt, zu dem die Multicast-Daten oder die Broadcast-Daten über das drahtlose lokale Netzwerk an das Endgerät (400) übertragen werden; oder
einen Kanal des drahtlosen lokalen Netzwerks, der zum Übertragen der Multicast-Daten oder der Broadcast-Daten verwendet wird.

9. Computerprogramm mit Anweisungen, die, wenn das Programm durch ein Endgerät nach Anspruch 5 ausgeführt wird, den Funkzugangsnetzwerkknoten veranlassen:
Steuerinformation, die mit einer Übertragung von Multicast-Daten oder Broadcast-Daten in Beziehung steht, direkt von einer Basisstation zu empfangen, wobei die Steuerinformation aufweist:
einen Zeitpunkt, zu dem die Multicast-Daten oder die Broadcast-Daten über das drahtlose lokale Netzwerk an das Endgerät (400) übertragen werden; oder
einen Kanal des drahtlosen lokalen Netzwerks, der zum Übertragen der Multicast-Daten oder der Broadcast-Daten verwendet wird;
Multicast-Daten oder Broadcast-Daten, die von einem Kernnetzwerk über das drahtlose lokale Netzwerk übertragen werden, von einem Zugriffspunkt (300) des drahtlosen lokalen Netzwerks zu empfangen, wobei die Multicast-Daten oder die Broadcast-Daten gemäß der Steuerinformation empfangen werden; und
eine Verarbeitung der Multicast-Daten oder der Broadcast-Daten auszuführen.

## Revendications

1. Nœud de réseau d'accès radio (100), ledit nœud de réseau d'accès radio étant une station de base, comprenant :
une première section de traitement de communication (143, 441, 911), configurée pour recevoir des données de multidiffusion ou des données de radiodiffusion transmises depuis un réseau central ;
une deuxième section de traitement de communication (145, 443, 913) configurée pour transmettre les données de multidiffusion ou les données de radiodiffusion à un appareil terminal (400) par le biais d'un réseau local sans fil ; et
une troisième section de traitement de communication (147) configurée pour transmettre, directement à l'appareil terminal (400), des informations de commande concernant la transmission des données de multidiffusion ou des données de radiodiffusion, dans lequel les informations de commande sont :
un moment auquel les données de multidiffusion ou les données de radiodiffusion sonttransmises à l'appareil terminal (400) par le biais du réseau local sans fil ; ou
un canal du réseau local sans fil utilisé pour transmettre les données de multidiffusion ou les données de radiodiffusion.

2. Nœud de réseau d'accès radio (100) selon la revendication 1, dans lequel la station de base est un nœud B évolué, eNB.

3. Nœud de réseau d'accès radio (100) selon l'une quelconque des revendications 1 ou 2, comprenant en outre
une section d'obtention d'informations (141) configurée pour obtenir des informations d'enregistrement pour l'enregistrement du réseau local sans fil en tant que zone de transmission des donnéesde multidiffusion ou des donnéesde radiodiffusion,
dans lequel la première section de traitement de communication (143, 441, 911) est configurée pour transmettre les informations d'enregistrement à une entité de commande.

4. Nœud de réseau d'accès radio (100) selon la revendication 3, dans lequel les informations d'enregistrement comportent un identifiant du réseau local sans fil.

5. Appareil terminal (400) comprenant:
une première section de traitement de communication (443) configurée pour recevoir, directement depuis une station de base, des informations de commande concernant la transmission de données de multidiffusion ou de données de radiodiffusion, dans lequel les informations de commande sont :
un moment auquel les données de multidiffusion ou les données de radiodiffusion sonttransmises à l'appareil terminal (400) par le biais du réseau local sans fil ; ou
un canal du réseau local sans fil utilisé pour transmettre les données de multidiffusion ou les données de radiodiffusion ;
une deuxième section de traitement de communication (441) configurée pour recevoir, depuis un point d'accès de réseau local sans fil (300), des données de multidiffusion ou desdonnéesde radiodiffusion transmises depuis un réseau central par le biais du réseau local sans fil, dans lequel la première section de traitement de communication (441) est configurée pour recevoir les données de multidiffusion ou les données de radiodiffusion selon les informations de commande ; et
une section de traitement de données (440) configurée pour réaliser un traitement pour les données de multidiffusion ou les données de radiodiffusion.

6. Procédé réalisé par un nœud de réseau d'accès radio (100), ledit nœud de réseau d'accès radio (100) étant une station de base, ledit procédé comprenant :
la réception de données de multidiffusion ou des données de radiodiffusion transmises depuis un réseau central ;
la transmission des données de multidiffusion ou desdonnéesde radiodiffusion à un appareil terminal (400) par le biais d'un réseau local sans fil; et
la transmission, directement à l'appareil terminal (400), d'informations de commande concernant la transmission des données de multidiffusion ou des données de radiodiffusion, dans lequel les informations de commande sont :
un moment auquel les données de multidiffusion ou les données de radiodiffusion sonttransmises à l'appareil terminal (400) par le biais du réseau local sans fil; ou
un canal du réseau local sans fil utilisé pour transmettre les données de multidiffusion ou les données de radiodiffusion.

7. Procédé réalisé par un appareil terminal (400), ledit procédé comprenant :
la réception, directement depuis une station de base, d'informations de commande concernant la transmission de données de multidiffusion ou de données de radiodiffusion, dans lequel les informations de commande sont :
un moment auquel les données de multidiffusion ou les données de radiodiffusion sonttransmises à l'appareil terminal (400) par le biais du réseau local sans fil; ou
un canal du réseau local sans fil utilisé pour transmettre les données de multidiffusion ou les données de radiodiffusion ;
la réception, depuis un point d'accès de réseau local sans fil (300), de données de multidiffusion ou de données de radiodiffusion transmises depuis un réseau central par le biais du réseau local sans fil, dans lequel les données de multidiffusion ou les données de radiodiffusion sont reçues selon les informations de commande ; et
la réalisation d'un traitement pour les donnéesde multidiffusion ou les données de radiodiffusion.

8. Programme d'ordinateur comprenant des instructions qui, lorsque le programme est exécuté par un nœud de réseau d'accès radio selon la revendication 1, amènent le nœud de réseau d'accès radio à :
recevoir des données de multidiffusion ou des données de radiodiffusion transmises depuis un réseau central ;
transmettre les données de multidiffusion ou les données de radiodiffusion à un appareil terminal par le biais d'un réseau local sans fil; et
transmettre, directement à l'appareil terminal (400), des informations de commande concernant la transmission des données de multidiffusion ou des données de radiodiffusion, dans lequel les informations de commande sont :
un moment auquel les données de multidiffusion ou les données de radiodiffusion sonttransmises à l'appareil terminal (400) par le biais du réseau local sans fil; ou
un canal du réseau local sans fil utilisé pour transmettre les données de multidiffusion ou les données de radiodiffusion.

9. Programme d'ordinateur comprenant des instructions qui, lorsque le programme est exécuté par un appareil terminal selon la revendication 5, amènent le nœud de réseau d'accès radio à :
recevoir, directement depuis une station de base, des informations de commande concernant la transmission de données de multidiffusion ou de données de radiodiffusion, dans lequel les informations de commande sont :
un moment auquel les données de multidiffusion ou les données de radiodiffusion sonttransmises à l'appareil terminal (400) par le biais du réseau local sans fil ; ou
un canal du réseau local sans fil utilisé pour transmettre les données de multidiffusion ou les données de radiodiffusion ;
recevoir, depuis un point d'accès de réseau local sans fil (300), des données de multidiffusion ou des données de radiodiffusion transmises depuis un réseau central par le biais du réseau local sans fil, dans lequel les données de multidiffusion ou les données de radiodiffusion sont reçues selon les informations de commande ; et
réaliser un traitement pour les données de multidiffusion ou les données de radiodiffusion.
